(19)

Europäisches Patentamt
European Patent Office
Office européen des brevets

(11) **EP 2 270 916 A2**

(12) **EUROPEAN PATENT APPLICATION**

(43) Date of publication:
05.01.2011 Bulletin 2011/01

(51) Int Cl.:
*H01M 10/0525* (2010.01)   *H01M 4/485* (2010.01)
*H01M 4/131* (2010.01)   *C01G 31/02* (2006.01)

(21) Application number: 10168047.8

(22) Date of filing: 01.07.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(30) Priority: 02.07.2009 JP 2009157831
31.03.2010 JP 2010080210

(71) Applicant: Fuji Jukogyo Kabushiki Kaisha
Tokyo160-8316 (JP)

(72) Inventors:
• Shiozaki, Ryuji
Tokyo 160-8316 (JP)
• Maruyama, Daisuke
Tokyo 160-8316 (JP)
• Mukainakano, Yuga
Tokyo 160-8316 (JP)
• Baba, Ken
Tokyo 160-8316 (JP)

(74) Representative: Becker Kurig Straus
Patentanwälte
Bavariastrasse 7
80336 München (DE)

(54) **Electrode material and lithium ion secondary battery**

(57)   The electrode material according to the present invention has a crystal phase in the form of a lattice containing lithium vanadium oxide, such as $Li_{0.3}V_2O_5$ with a primary particle diameter of 10 nm or more and 200 nm or less, wherein lithium is arranged in the lattice. Accordingly, when the electrode material is used as the positive electrode material, especially in the crystallized state containing an amorphous glass composition such as phosphor, lithium, antimony (or iron), a high battery capacity can be obtained. Further, even if the charging and discharging are repeated, the crystal structure is difficult to be collapsed, whereby the cycle characteristic is enhanced.

*Fig. 1*

S1 — Melting

S2 — Quenching and solidifying

S3 — Heat treatment

S4 — Pulverizing

↓

Electrode material powder

EP 2 270 916 A2

**Description**

BACKGROUND OF THE INVENTION

Field of the Invention

The present invention relates to techniques for lithium ion batteries, and more particularly to a technique well adaptable to an electrode material and a lithium ion secondary battery using the same.

Description of the Related Art

Many efforts have been made to use a lithium ion secondary battery (LIB), which has high energy density, for an electric storage source of an electric vehicle (EV). In order to increase a travel distance of the EV, the energy density of the LIB has to be further increased.

Safety is of course needed to apply the LIB to the EV, and in particular, it is necessary to enhance a structural stability of a positive electrode in a charged state.

Under the background described above, a vanadium oxide such as $V_2O_5$ and lithium-vanadium composite oxide such as $LiV_2O_5$ have high potential as an active material of an LIB positive electrode (electrode material), since they have a large valence. Further, since the vanadium oxide and the lithium-vanadium composite oxide have a thermally stable composition, the use of the vanadium oxide or the lithium-vanadium composite oxide instead of a compound of lithium and cobalt acid, manganese acid or nickel acid has been considered.

On the other hand, as described in C.Delmas, H. Congnac-Auradou, J. M. Cocciantelli, Menetrier, J., P. Doumerc, Solid State Ionics 69 (1994) 257-264, the structure of the vanadium oxide and the lithium vanadium composite oxide, or charging and discharging characteristic thereof when they are used for a positive electrode material, have been studied for some time. However, when lithium ions are introduced into the crystal structure of the vanadium or lithium vanadium in an amount exceeding a certain limit, the crystal structure is destroyed by which the capacity of the battery is liable to decrease.

In view of this, there has been proposed a lithium secondary battery in which, in order to enhance a cycle characteristic, a vanadium oxide having an amorphous phase is prepared with a melt-quenching method and used for a positive electrode material (see, for example, Japanese Examined Patent Application Publication (JP-B) No. 1993-80791 or Japanese Patent Unexamined Application Publication (JP-A) No. 1996-83606). Specifically, the vanadium oxide is prepared by the melt-quenching method in which a phosphate compound such as $P_2O_5$ is added and melted into $V_2O_5$, and then, the resultant is put into water to perform quenching. There has been a proposal for an amorphous electrode (positive electrode) material including a vanadium oxide prepared by the melt-quenching method and a lithium ion source (see, for example, JP-A No. 2007-42618).

However, in the proposals at pages 257 - 264 in Solid State Ionics 69 (1994) orJP-ANo. 1993-80791 and JP-ANo. 1996-83606, the supply amount of lithium ions contained in the vanadium oxide or lithium vanadium composite oxide is small. Therefore, it is necessary to supply lithium ions into a negative electrode in order to enhance the energy density of the LIB. When the LIB is constructed in a design of operating the LIB only with lihitum ions in the positive electrode, the LIB can be used only for limited purposes such as a primary battery or a secondary battery that has an extremely small current amount.

According to the proposal in JP-A No. 2007-42618, an electrode structure can be achieved where lithium ions can be supplied to a cell. However, in order to attain a high charging and discharging capacity with the positive electrode material in this proposal, the inclusion of some water into the crystal structure of the positive electrode material is needed. The inclusion also forms an inactive amorphous and a phase transition, which entails a problem of deteriorating long-term reliability of the cycle characteristic and the like.

SUMMARY OF THE INVENTION

The present invention is made in view of the aforementioned problems, and aims to provide an electrode material that can form a lithium ion secondary battery having a high capacity and an excellent cycle characteristic, and a lithium ion secondary battery using the same.

The aforementioned and other objects and novel features of the present invention will be apparent from the description and the attached drawings.

The summary of a representative aspect, among aspects described in the present application, will be explained below.

Specifically, the electrode material according to the present invention contains a crystal phase and an amorphous phase, wherein the crystal phase includes a lithium vanadium oxide ($Li_xV_2O_5$) having a primary particle diameter of 10 nm or more and 200 nm or less, and the lithium vanadium oxide has a diffusion path of lithium ions having a one-dimensional tunnel structure when x = 0.3.

The amorphous phase preferably contains a glass material.

The amorphous phase preferably contains phosphor and lithium, and antimony or iron.

The lithium ion secondary battery according to a representative embodiment has a positive electrode using the electrode material described above.

The effect obtained by the representative aspect of the present invention will briefly be described below.

The electrode material according to the present invention includes a lithium vanadium oxide ($LixV_2O_5$) having a primary particle diameter of 10 nm or more and 200 nm or less in the crystal phase, wherein the lithium vanadium oxide has a diffusion path of lithium ion having a one-dimensional tunnel structure when x = 0.3. Accordingly, when the electrode material is used as the positive electrode material and, in particular, is in the crystallized state containing an amorphous glass composition such as phosphor, lithium, antimony (or iron), a high battery capacity can be obtained. Further, even if the charging and discharging are repeated, the crystal structure is difficult to collapse, whereby the cycle characteristic is enhanced.

Accordingly, a lithium ion secondary battery having a high capacity and an excellent cycle retention rate can be manufactured.

BRIEF DESCRIPTION OF THE DRAWINGS

Fig. 1 is a flowchart illustrating a process of manufacturing an electrode material according to the present invention.

Fig. 2 is a sectional view illustrating a brief configuration of a lithium ion secondary battery according to the present invention.

Fig. 3 is a sectional view illustrating a brief configuration of another lithium ion secondary battery according to the present invention.

Fig. 4A is a graph illustrating a correlation between a particle diameter of a positive electrode material powder and an initial discharging capacity.

Fig. 4B is a graph illustrating a correlation between a crystallinity of the positive electrode material powder and the initial discharging capacity.

Fig. 5A is a graph illustrating a correlation between a particle diameter of the positive electrode material powder and a cycle retention rate.

Fig. 5B is a graph illustrating a correlation between a crystallinity of of the positive electrode material powder and the cycle retention rate.

Figs. 6A and 6B are graphs illustrating results of X-ray diffraction for a positive electrode material powder according to the present invention.

Fig. 7A and 7B are graphs illustrating results of X-ray diffraction for comparative positive electrode material powers.

Figs. 8A and 8B are graphs illustrating results of X-ray diffraction for comparative positive electrode material powders.

DETAILED DESCRIPTION OF THE PREFERRED EMBODIMENTS

An embodiment of the present invention will be described in detail below.

An electrode material according to the present invention will firstly be described. The electrode material according to the present invention can suitably be used as an active material of a positive electrode material in a lithium ion secondary battery. The electrode material has a crystal phase and an amorphous phase. To achieve a desired effect intended by the present invention, the crystal phase is needed. Although a detail is not known, it is considered that further effect can be obtained by the presence of the amorphous phase. If the electrode material has only an amorphous phase, the operating potential of the battery is reduced to thereby lower the energy density.

The crystal phase contains $Li_{0.3}V_2O_5$. This crystal phase is formed into a lattice, and it is considered that the crystal phase has a structure in which a lithium is arranged in the lattice. The number of lithium is represented by a decimal number in the chemical formula. If the number of lithium is represented by an integer, the structure is not always matched, and thus this notation is normally used.

In the present invention, it is important that the crystal structure containing $Li_{0.3}V_2O_5$ is present. Therefore, the active material to be used is lithium vanadium oxide ($LixV_2O_5$) and has only to form a lattice crystal structure of $Li_{0.3}V_2O_5$ when the amount of lithium is 0.3. The electrode material can be in a crystal phase when the amount of lithium is not 0.3. In a form of an electrode, it is supposed that the amount of lithium becomes less than 0.3 when it is charged, and exceeds 0.3 when it is discharged. This can easily be understood, considering that lithium ions are electrochemically doped or de-doped. Specifically, An amount of lithium in the lithium vanadium oxide can vary according to the charging and discharging of lithium, as indicated by LixV$_2$O$_5$ (0<x≤4.0). Accordingly, the lithium vanadium oxide according to the present invention only has to have a lattice crystal structure of Li$_{0.3}$V$_2$O$_5$ when lithium ions are doped or de-doped such that the amount of lithium becomes 0.3, even if the amount of lithium which the crystal phase contains is not 0.3.

It is preferable that the size of the particle (crystallite) of the lithium vanadium oxide is set such that the primary particle diameter (crystallite diameter) is 10 nm or more and 200 nm or less., It is more preferable that the primary particle diameter (crystallite diameter) is 30 nm or more and 200 nm or less, particularly 40 nm or more and 200 nm or less, and more particularly 60 nm or more and 200 nm or less since the battery capacity and cycle characteristic can further be enhanced. When the primary particle diameter exceeds 200 nm, the area of the contact interface with electrolyte solution decreases, so that the resistance increases. Therefore, the battery capacity may be decreased. Further, upon the dope and de-dope of lithium ions, the crystal structure becomes unstable, with the result that the cycle characteristic may be deteriorated. When the primary particle diameter is less than 10 nm, the battery capacity may be decreased.

The amorphous phase contains phosphor and lithium, and antimony or iron, in a form of a conductive metal oxide. In particular, it is preferable that the amorphous phase does not contain vanadium. If the amorphous phase contains vanadium, dissolution reaction of vanadium is caused due to the contact with a small amount of water or protons in the boundary face, whereby the cell performance may be deteriorated.

The condition in which the electrode material has a crystal phase and an amorphous phase, its structure, and the condition in which the crystal phase and the amorphous phase has the above-mentioned compositions, can be confirmed by an analysis with X-ray diffraction. The primary particle diameter of the lithium vanadium oxide can be measured as follows, for example: the primary particle diameter is calculated according to Scherrer' s equation with the use of an X-ray diffraction device so as to obtain an average particle diameter. Alternatively, the primary particle diameter can be measured based on a photograph taken with a transmission electron microscope (TEM) or a scanning electron microscope (SEM).

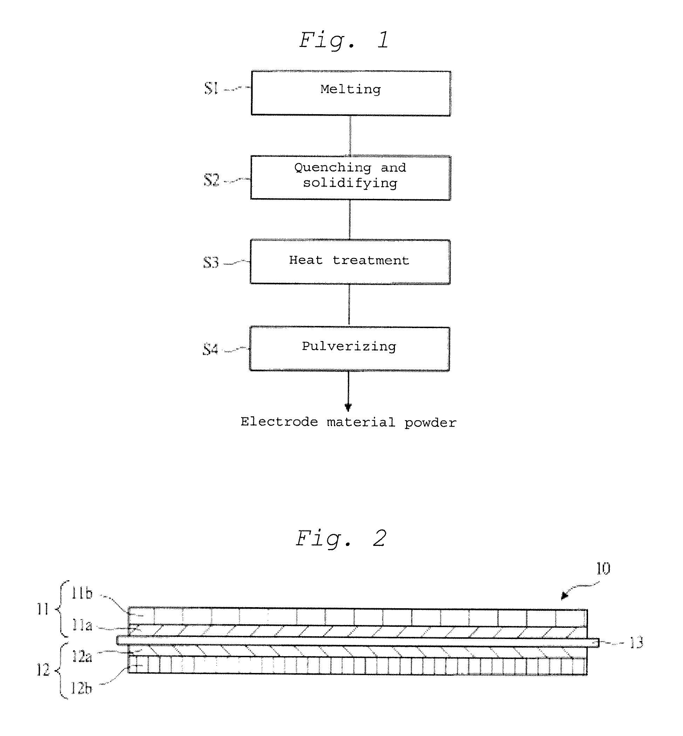

The electrode material can be obtained by a melt-quenching method in which a crystallization inhibitor such as P$_2$O$_5$ is added and melted, and then, the resultant is quenched. Fig. 1 is a flowchart illustrating a manufacturing process of an electrode material according to the present invention.

As illustrated in Fig. 1, in S1, a powdered crystallization inhibitor is added to a powder that is a raw material of the lithium vanadium oxide, and the resultant is melted at a predetermined temperature. Then, in S2, the resultant is left for a predetermined time, and put on a room-temperature plate or a cooled plate in order to allow the resultant to be quenched and solidified, whereby a condensate in a glass state is obtained. Then, in S3, the glassy condensate is subject to a heat treatment to allow crystals to deposit, whereby a condensate having two coexistent phases, i.e., a crystal phase and an amorphous phase, is obtained. Finally, in S4, the resultant is pulverized to prepare an electrode material powder having a particle diameter within the scope of the present invention.

As a raw material of the lithium vanadium oxide, (Li$_2$O)a(P$_2$O$_5$)b(Fe$_2$O$_3$)c(V$_2$O$_5$)d (0<a≤0.5, 0<b≤0.5, 0<c≤0.5, and 0.5≤d<1.0) can preferably be used, for example. The composition of O<a≤0.2, 0<b≤0.15, 0<c≤0.2, and 0.5≤d<0. 8 is more preferable for the composition of the raw material.

The melting temperature in the melt-quenching method in S1 only has to be a temperature by which each raw material is melted. When the melting temperature is 900 degrees Celsius or more, a preferable molten material can be obtained. In the quenching process in S2, the material only has to be cooled faster than a speed by which a crystal core is formed in order to obtain the glass material from the molten material. When the cooling speed is 1000 K/sec or more, a preferable glass material can be obtained. The crystal deposition from the glass material by the heat treatment in S3 is performed at the temperature of 50 to 550 degrees Celsius. Examples of the crystallization inhibitor for inhibiting the crystallization from the condensate due to the heat treatment include TeO$_2$, GeO$_2$, BaO, PbO, Sb$_2$O$_5$, etc., in addition to a phosphate compound such as P$_2$O$_5$. A graphite plate or a metal plate such as a copper may be used for the plate used upon the rapid cooling in the melt-quenching method.

The electrode material is mixed with a binder such as polyvinylidene fluoride (PVDF), and the resultant is formed into an application layer for a positive electrode material in a form of slurry with the use of a solvent such as N-methyl pyrrolidone (NMP). The obtained application layer is applied onto a current collector, whereby a positive electrode can be formed. It is preferable that the application layer is formed to have a thickness of 10 to 100 $\mu$m, for example.

For the current collector, a conductive base is used in which a surface contacting with the application layer exhibits conductivity. The conductive base can be made of a conductive material such as a metal, conductive metal oxide, and conductive carbon. Examples of the preferable conductive material include copper, gold, aluminum, and an alloy thereof, and conductive carbon. The current collector may be configured such that a body of the base made of a non-conductive material is covered by a conductive material.

As described above, the electrode material according to the present invention has a crystal phase in the form of lattice containing Li$_{0.3}$V$_2$O$_5$, wherein lithium is arranged in the lattice. Specifically, Li$_{0.3}$V$_2$O$_5$ has a covalent bond to the vanadium element and oxygen element in a three-dimensional direction, wherein lithium ions are present so as to one-dimensionally occupy the gap. Specifically, Li$_{0.3}$V$_2$O$_5$ has a diffusion path of lithium ions having a one-dimensional tunnel structure. When the primary particle diameter of the electrode material is set to be 10 nm or more and 200 nm or less, the crystal structure is difficult to be collapsed when the charging and discharging are repeated, compared to a particle having a primary particle diameter larger than the above-mentioned range. The one-dimensional tunnel structure is disclosed, for example, in an electronic edition of Nature Materials on 2008, 8. 11.

On the other hand, a vanadium oxide such as $V_2O_5$ has a layered crystal structure, wherein lithium ions go into and out of the portion between the layers. Specifically, $V_2O_5$ has a structure in which a vanadium element and an oxygen element are covalently bonded in a two-dimensional direction, and this sheet is laminated by an electrostatic interaction. In other words, $V_2O_5$ has a layered structure. Therefore, as the primary particle diameter increases, the length of the path through which the lithium ions go in or go out of the portion between the layers increases, with a result that the lithium ions are difficult to go in and go out of the portions between the layers. Accordingly, the capacity is reduced. The inventors of the present invention has found out that, when the primary particle diameter (layer length) exceeds 30 nm, the crystal structure is collapsed to deteriorate the cycle characteristic.

Specifically, since the electrode material of the present invention has lithium arranged in the lattice crystal structure, a battery having a crystal phase but having an excellent cycle characteristic can be obtained, compared to a vanadium oxide such as $V_2O_5$. Since the upper limit of the primary particle diameter is set to be 200 nm, the internal resistance can be suppressed to be low, whereby not only the cycle characteristic but also the battery capacity can be enhanced. As described above, the electrode material according to the present invention having the crystal phase containing $Li_{0.3}V_2O_5$ is different from the layered vanadium oxide from the viewpoint of the crystal structure, and hence, the characteristic is greatly different.

Next, a lithium ion secondary battery according to the present invention will be described. The lithium ion secondary battery according to the present invention has a positive electrode made from the electrode material according to the present invention, a negative electrode, and electrolyte dissolved in a solvent. The lithium ion secondary battery further includes a lithium electrode according to need.

The negative electrode is formed in such a manner that an active material of a lithium material, which is generally used, is mixed with a binder to form slurry like the electrode material of the present invention, and the resultant is applied onto a current collector. Examples of the lithium material include lithium metal material, intermetallic compound material of a metal and a lithium metal, lithium compound, and lithium intercalation carbon material. Examples of the lithium metal material include metal lithium and lithium alloy (e.g., Li-Al alloy). Examples of the intermetallic compound material of a metal and a lithium metal include tin and silicon. Examples of the lithium compound include a lithium nitride.

Examples of a usable lithium intercalation carbon material include graphite, carbon-based material, and polyacene-based material. Examples of the carbon material include non-graphitizable carbon material. Examples of the polyacene-based material include PAS that is an insoluble and infusible base and has a polyacene skeletal structure. A negative electrode formed by using any of the lithium intercalation carbon materials allows lithium ions to be reversibly doped.

In the specification of the present invention, the term doping (dope) involves storage, support, adsorb or insert, and specifically a phenomenon where lithium ions and/or anions enter the positive electrode or the negative electrode. The term de-doping (de-dope) involves release, and desorb, and specifically a phenomenon where lithium ions and/or anions go out of the positive electrode or the negative electrode.

When the carbon material that can dope and de-dope the lithium ions is used, a lithium electrode is separately provided, whereby the lithium ions are pre-doped into the negative electrode from the lithium electrode upon the initial charging. The lithium electrode is formed by adhering the above-mentioned current collector onto the lithium ion source. A metal lithium or lithium-aluminum alloy can be used for the lithium ion source. Specifically, the material that contains at least lithium elements and can supply lithium ions can be used. It is preferable that the lithium ions are doped by a molar ratio of 0.1 to 6 with respect to the above-mentioned electrode material. When the doping amount of lithium ions is less than 0.1 in a molar ratio, the doping effect cannot sufficiently be exhibited. On the other hand, when the doping amount of lithium ions exceeds 6, the electrode material might be reduced to a metal. The lithium-based materials exemplified as the negative electrode material other than the lithium intercalation carbon material can be used for the lithium electrode.

Lithium salts such as $CF_3SO_3Li$, $C_4F_9SO_8Li$, $(CF_3SO_2)_2NLi$, $(CF_3SO_2)_3CLi$, $LiBF_4$, $LiPF_6$, and $LiClO_4$ can be used as the electrolyte, for example.

The solvent that dissolves the electrolyte is a non-aqueous solvent. Examples of the non-aqueous solvent include electrolyte solution of chain carbonate, cyclic carbonate, cyclic ester, nitrile compound, acid anhydride, amide compound, phosphate compound, and amine compound. The electrolyte solution may be solution of non-aqueous solvent or polymer gel (polymer gel electrolyte) containing the electrolyte solution.

Examples of the non-aqueous solvent include ethylene carbonate (EC), diethyl carbonate (DEC), propylene carbonate, dimethoxyethane, γ-butyloractone, n-methylpyrrolidinone, N,N'-dimethylacetoamide, and acetonitrile. Further, a mixture of propylene carbonate and dimethoxyethane, and a mixture of sulfolane and tetrahydrofuran can be used as the non-aqueous solvent.

Fig. 2 is a sectional view illustrating a brief configuration of a lithium ion secondary battery according to the present invention. The lithium ion secondary battery 10 illustrated in Fig. 2 has a positive electrode 11 and a negative electrode 12 that are arranged so as to oppose each other across an electrolyte layer 13.

The positive electrode 11 is composed of a positive electrode active material layer 11a containing the electrode material according to the present invention, and a positive electrode current collector 11b. The positive electrode active material layer 11a is applied onto the positive electrode current collector 11b at the side of the electrolyte layer 13 as an application layer.

The negative electrode 12 is, like the positive electrode 11, composed of a negative electrode active material layer 12a and a negative electrode current collector 12b. The negative electrode active material layer 12b is applied onto the negative electrode current collector 12b at the side of the electrolyte layer 13 as an application layer.

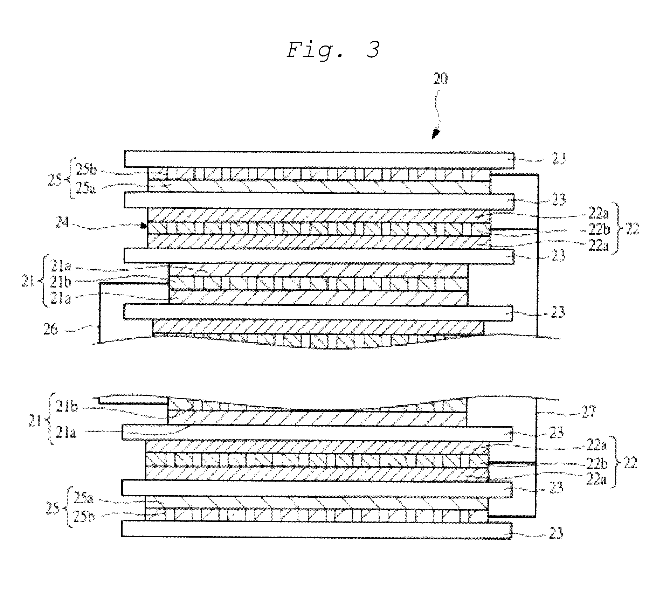

Fig. 3 is a sectional view illustrating a brief configuration of another lithium ion secondary battery according to the present invention. The lithium ion secondary battery 20 illustrated in Fig. 3 has an electrode unit 24 that includes a plurality of positive electrodes 21 and negative electrodes 22. The positive electrodes 21 and negative electrodes 22 are alternately stacked such that a separator 23 is interposed between each of the positive electrodes 21 and negative electrodes 22. The negative electrode 22 is arranged at outermost parts of the electrode unit 24. Specifically, the electrode unit 24 includes, between both negative electrodes 22, a plurality of positive electrodes 21 and negative electrodes 22 that are stacked such that the separator 23 is interposed between each of the positive electrodes 21 and electrodes 22.

At further outer parts of the outermost negative electrodes 22, a lithium electrode 25 is arranged so as to oppose to the negative electrode 22 across the separator 23. The lithium electrode 25 has, for example, a metal lithium 25a mounted on a lithium current collector 25b. The lithium electrode current collector 25b is a porous member formed with a large number of holes (through-holes). Lithium ions dissolved out of the lithium electrode 25 are pre-doped into the negative electrode 22.

The positive electrode 21 includes a positive electrode active material layer 21a containing the electrode material according to the present invention, and a positive electrode current collector 21b, wherein the positive electrode active material layer 21a is provided on both surfaces of the positive electrode current collector 21b. The positive electrode current collector 21b is a porous member like the lithium electrode current collector 25b. Similarly, the negative electrode 22 has negative electrode active material layers 22a formed on both surfaces of a negative electrode current collector 22b. The negative electrode current collector 22b is a porous member. The separator 23 is composed with, for example, a porous member of polyolefin having durability to the electrolytic solution, positive electrode active material, negative electrode active material, or the like, and having through-holes.

The plurality of positive electrode current collectors 21b are connected to one another by a lead 26. Similarly, the plurality of negative electrode current collectors 22b and the lithium electrode current collector 25b are connected to one another by a lead 27.

The lithium ion secondary battery 10 is formed such that the electrode unit 24 thus configured is packaged with an unillustrated laminate film, wherein the electrolyte solution is put therein.

Since the lithium ion secondary battery according to the present invention employs the electrode material according to the present invention for the positive electrode material, it has a high capacity and excellent cycle characteristic.

[Examples]

The present invention will further be described below with reference to Examples. It is to be noted that the present invention is not limited to the Examples described below.

(Example 1)

[Fabrication of positive electrode] As illustrated in Table 1, a positive electrode material powder was obtained by dry-grinding a condensate of an active material made of $Li_{0.3}V_2O_5$, which was obtained by the melt-quenching method illustrated in Fig. 1, using a compound made of 77 mol percent $V_2O_5$, 9 mol percent $P_2O_5$, 3 mol percent $Sb_2O_3$, and 11 mol percent $Li_2O$ as raw materials. The positive electrode material powder was mixed with five weight percent of a binder containing PVDF to prepare slurry by using N-methylpyrrolidone (NMP) as a solvent. Then, the slurry was coated on a porous Al foil by a doctor blade method. The slurry was uniformly applied and molded such a manner that the composite density per one surface was 2 $g/cm^3$, and the resultant was cut into a square of 24 mm x 36 mm to form a positive electrode.

The crystal structure of the positive electrode material powder was analyzed according to the method described in an Example 2 with the use of an X-ray diffractometer (RINT 2500 HL wide angle X-ray diffractometer by Rigaku Corporation), and it was confirmed that the powder had a crystal phase and an amorphous phase.. Further, the average primary particle diameter of the positive electrode material powders was 63.0 nm, and the crystallinity thereof was 96 percent. It was estimated from the composition ratio of the raw materials that the amorphous phase contained phosphor, lithium and antimony.

[Fabrication of negative electrode] A graphite and PVDF serving as binder were mixed in a weight ratio of 94: 6, and the resultant was diluted with NMP to prepare slurry. This slurry was uniformly applied on one surface or both surfaces of a copper current collector formed with through-holes in such a manner that the composite density per one surface was 1.7 mg/cm$^3$, and the resultant was molded and cut into a square of 26 mm x 38 mm to form a negative electrode.

[Fabrication of battery] Each of 12 positive electrodes and each of 13 negative electrodes (2 of them had the slurry applied on only one surface) thus formed were laminated with a polyolefin microporous film interposed therebetween as a separator. A lithium electrode having a metal lithium adhered onto a stainless porous foil was arranged at the outermost layer via the separator, whereby an electrode laminated unit including positive electrodes, negative electrodes, lithium electrodes, and separators was fabricated. The electrode laminated unit was packaged with an aluminum laminate film, and an electrolyte solution obtained by dissolving lithium fluoroborate (LiBF$_4$) at one mol/l into solvent mixture containing ethylene carbonate (EC) and diethyl carbonate (DEC) at the weight ratio of 1 : 3 was injected. With this process, a lithium ion secondary battery was assembled.

[Measurement of initial discharging capacity and cycle retention rate] The lithium ion secondary battery fabricated as described above was left for 20 days, and then, one cell thereof was disassembled. Since no metal lithium remained, it was confirmed from this result that the lithium ions in a required amount were supported and stored beforehand, i.e., pre-doped, into the negative electrode.

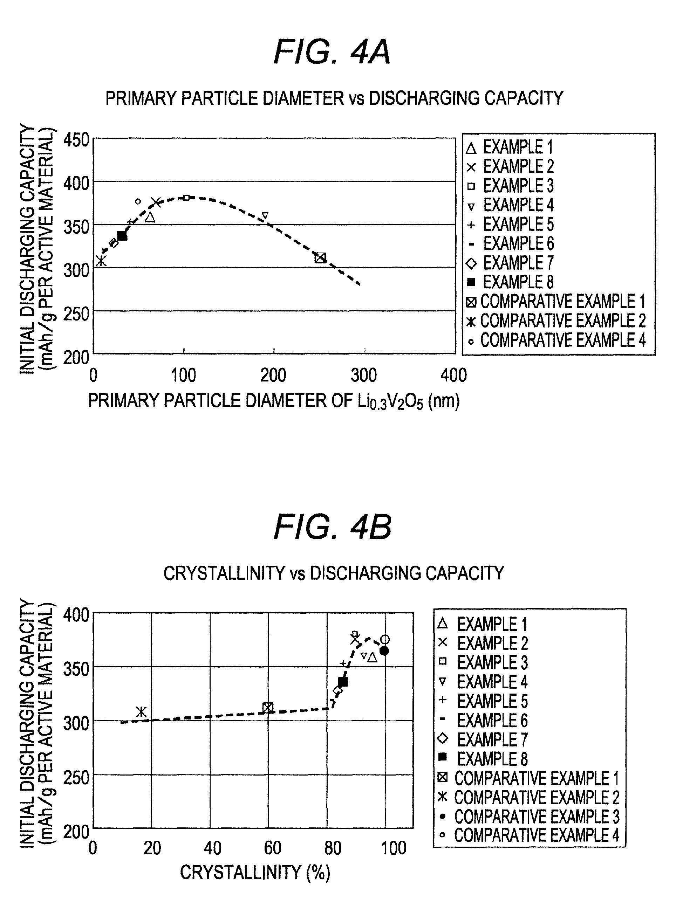

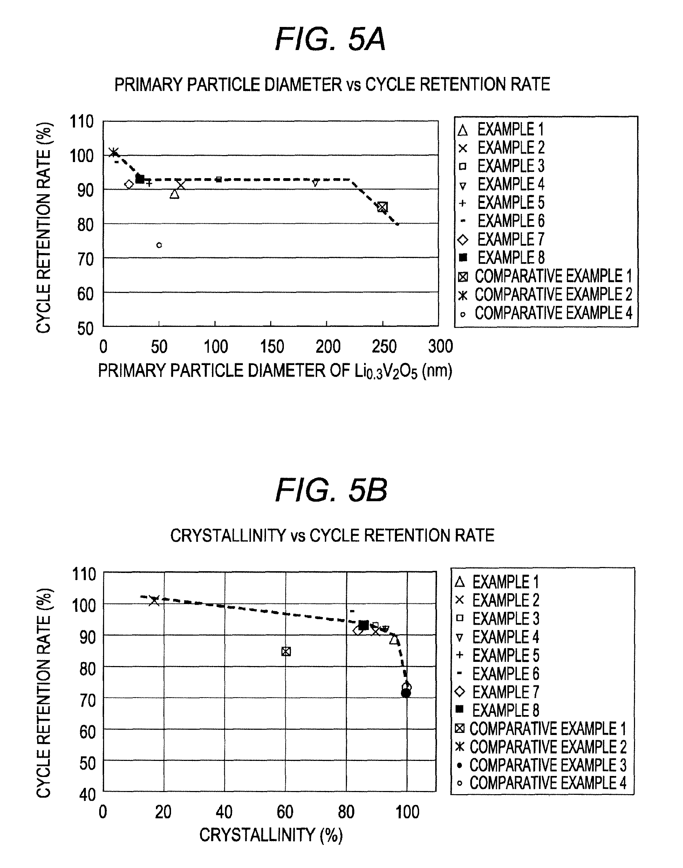

One cell of the remaining cells was used for measuring an initial discharging capacity per active material (mAh/g active material) at 0.1C discharging rate and a cycle retention rate (percent). The cycle retention ratio was obtained in such a manner that, after the charging rate was accelerated from 0.1 C to 0.2 C, 50 charging and discharging cycles were repeated and the ratio of the discharging rate after the 50 cycles to the initial 0.2 C discharging capacity was measured. The initial discharging capacity was 359 mAh/g per the active material, and the cycle retention rate was 88.8 percent. Table 2 shows the result together with the primary particle diameter and the crystallinity of the positive electrode material powder. Fig. 4A is a graph illustrating a correlation between the primary particle diameter and the initial discharging capacity, Fig. 4B is a graph illustrating a correlation between the crystallinity and the initial discharging capacity, Fig. 5A is a graph illustrating the correlation between the primary particle diameter and the cycle retention rate, and Fig. 5B is a graph illustrating the correlation between the crystallinity and the cycle retention rate. The results of later-described Examples are similarly illustrated.

(Example 2)

A positive electrode material powder and a lithium ion secondary battery were fabricated in the same manner as in the Example 1 except that the positive electrode material powder was prepared by using a compound made of 70 mol percent $V_2O_5$, 9 mol percent $P_2O_5$, 10 mol percent $Fe_2O_3$, and 11 mol percent $Li_2O$ as raw materials as illustrated in Table 1.

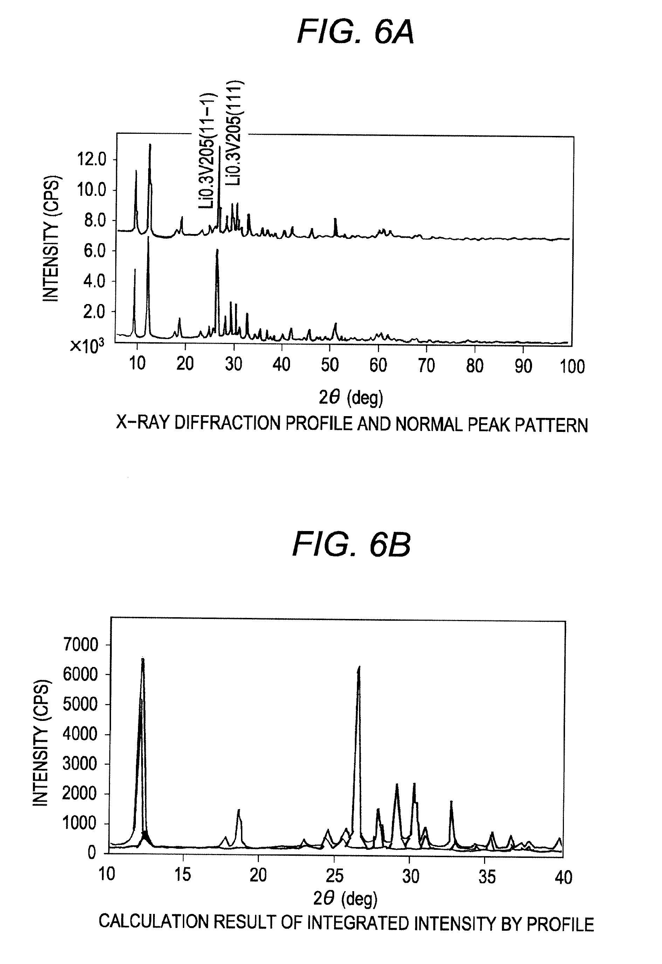

The positive electrode material powder was analyzed with the X-ray diffractometer, and it was confirmed that the powder had a crystal phase and an amorphous phase as illustrated in Figs. 6A and 6B. In the X-ray diffraction patterns shown in Figs. 6A and 6B, a diffraction curve specific to $Li_{0.3}V_2O_5$ was observed in the range of 2θ=10~40°. The diffraction curve near 2θ=26.4° can belong to the peak of a 11 (-) 1 surface of $Li_{0.3}V_2O_5$. It was estimated from the composition ratio of the raw materials that the amorphous phase contained phosphor, lithium and iron.

The average primary particle diameter of the positive electrode material powder having the peak at 2θ=26.4°, which was measured by the X-ray diffractometer, was calculated according to Scherrer's equation, and the result was 68.5 nm. An applicable range of Scherer's equation is considered as 1 to 100 nm. Therefore, when the particle diameter is larger than the applicable range, the particle diameter was estimated from a transmission electron image obtained by the TEM or a reflection electron image or a secondary electron image obtained by the SEM.

$$Dhkl=K \cdot \lambda\beta cos\theta$$

Dhkl: Size of crystallite
λ: Measured X-ray wavelength
β: Spread of diffraction curve due to the size of crystallite
θ: Bragg angle of diffraction pattern
K: Scherrer's constant
* If a half width is used for β, K = 0.94.

The crystallinity was 90 percent through the calculation described below with the use of the X-ray diffractometer.

With respect to the diffraction pattern acquired in 2θ=10~40°, the diffraction intensity caused by a crystal phase and a halo caused by an amorphous phase were separately calculated by the equation of (crystallinity (%)) = (crystal intensity)/(crystal intensity + amorphous intensity) x 100.

The initial discharging capacity and the cycle retention rate were measured for the obtained lithium ion secondary battery as in the Example 1: the initial discharging capacity was 376 mAh/g per an active material, and the cycle retention rate was 91.4 percent.

(Example 3)

A positive electrode material powders was prepared by using a compound made of 70 mol percent $V_2O_5$, 9 mol percent $P_2O_5$, 10 mol percent $Fe_2O_3$, and 11 mol percent $Li_2O$ as raw materials as illustrated in Table 1 in such a manner that the average primary particle diameter measured by the X-ray diffractometer became 103.0 nm. Except for this, the positive electrode material powder and a lithium ion secondary battery were fabricated in the same manner as described above.

The positive electrode material powder was analyzed with the use of the X-ray diffractometer, and it was confirmed that the powder had a crystal phase and an amorphous phase as in the Example 2. The crystallinity thereof was 89 percent.

It was estimated from the composition ratio of the raw materials that the amorphous phase included phosphor, lithium and iron

The initial discharging capacity and the cycle retention rate were measured for the obtained lithium ion secondary battery as in the Example 1: the initial discharging capacity was 380 mAh/g per an active material, and the cycle retention rate was 93.0 percent.

(Example 4)

A positive electrode material powder was prepared by using a compound made of 70 mol percent $V_2O_5$, 9 mol percent $P_2O_5$, 10 mol percent $Fe_2O_3$, and 11 mol percent $Li_2O$ as raw materials as illustrated in Table 1 in such a manner that the average primary particle diameter measured by the X-ray diffractometer became 190.0 nm. Except for this, the positive electrode material powder and a lithium ion secondary battery were fabricated in the same manner as described above.

The positive electrode material powder was analyzed with the use of the X-ray diffractometer, and it was confirmed that the powder had a crystal phase and an amorphous phase as in the Example 2. The crystallinity thereof was 93 percent. It was estimated from the composition ratio of the raw materials that the amorphous phase included phosphor, lithium and iron.

The initial discharging capacity and the cycle retention rate were measured for the obtained lithium ion secondary battery as in the Example 1: the initial discharging capacity was 360 mAh/g per an active material, and the cycle retention rate was 92.0 percent.

(Example 5)

A positive electrode material powder was prepared by using a compound made of 70 mol percent $V_2O_5$, 9 mol percent $P_2O_5$, 10 mol percent $Fe_2O_3$, and 11 mol percent $Li_2O$ as raw materials as illustrated in Table 1 in such a manner that the average primary particle diameter measured by the X-ray diffractometer became 40.0 nm. Except for this, the positive electrode material powder and a lithium ion secondary battery were fabricated in the same manner as described above.

The positive electrode material powder was analyzed with the use of the X-ray diffractometer, and it was confirmed that the powder had a crystal phase and an amorphous phase as in the Example 2. The crystallinity thereof was 86 percent. It was estimated from the composition ratio of the raw materials that the amorphous phase included phosphor, lithium and iron.

The initial discharging capacity and the cycle retention rate were measured for the obtained lithium ion secondary battery as in the Example 1: the initial discharging capacity was 353 mAh/g per an active material, and the cycle retention rate was 92.0 percent.

(Example 6)

A positive electrode material powder was prepared by using a compound made of 70 mol percent $V_2O_5$, 9 mol percent $P_2O_5$, 10 mol percent $Fe_2O_3$, and 11 mol percent $Li_2O$ as raw materials as illustrated in Table 1 in such a manner that the average primary particle diameter measured by the X-ray diffractometer became 10.0 nm. Except for this, the positive electrode material powder and a lithium ion secondary battery were fabricated in the same manner as described above.

The positive electrode material powder was analyzed with the use of the X-ray diffractometer, and it was confirmed that the powder had a crystal phase and an amorphous phase as in the Example 2. The crystallinity thereof was 82 percent. It was estimated from the composition ratio of the raw materials that the amorphous phase included phosphor, lithium and iron.

The initial discharging capacity and the cycle retention rate were measured for the obtained lithium ion secondary battery as in the Example 1: the initial discharging capacity was 320 mAh/g per an active material, and the cycle retention rate was 98.0 percent.

(Example 7)

A positive electrode material powder was prepared in the same manner as Example 1 except for such a manner that the average primary particle diameter measured by the X-ray diffractometer became 22.0 nm.

The positive electrode material powder was analyzed with the use of the X-ray diffractometer, and it was confirmed that the powder had a crystal phase and an amorphous phase as in the Example 1. The crystallinity thereof was 84 percent. It was estimated from the composition ratio of the raw materials that the amorphous phase included phosphor, lithium and antimony.

The initial discharging capacity and the cycle retention rate were measured for the obtained lithium ion secondary battery as in the Example 1: the initial discharging capacity was 328 mAh/g per an active material, and the cycle retention rate was 91.6 percent.

(Example 8)

A positive electrode material powder was prepared in the same manner as in the Example 1 except for such a manner that the average primary particle diameter measured by the X-ray diffractometer became 31.5 nm.

The positive electrode material powder was analyzed with the use of the X-ray diffractometer, and it was confirmed that the powder had a crystal phase and an amorphous phase as in the Example 1. The crystallinity thereof was 86 percent. It was estimated that the amorphous phase included phosphor, lithium and antimony.

The initial discharging capacity and the cycle retention rate were measured for the obtained lithium ion secondary battery as in the Example 1: the initial discharging capacity was 336 mAh/g per an active material, and the cycle retention rate was 93.0 percent.

(Comparative Example 1)

A positive electrode material powder was prepared by using a compound made of 70 mol percent $V_2O_5$, 9 mol percent $P_2O_5$, 10 mol percent $Fe_2O_3$, and 11 mol percent $Li_2O$ as raw materials as illustrated in Table 1 in such a manner that the average primary particle diameter measured by the X-ray diffractometer became 250.0 nm. Except for the this, the positive electrode material powder and a lithium ion secondary battery were fabricated in the same manner as described above.

The positive electrode material powder was analyzed with the use of the X-ray diffractometer, and it was confirmed that the powder had a crystal phase and an amorphous phase as in the Example 2. The crystallinity thereof was 60 percent. It was estimated from the composition ratio of the raw materials that the amorphous phase included phosphor, lithium and iron.

The initial discharging capacity and the cycle retention rate were measured for the obtained lithium ion secondary battery as in the Example 1: the initial discharging capacity was 312 mAh/g per an active material, and the cycle retention rate was 85.0 percent.

(Comparative Example 2)

A positive electrode material powder and a lithium ion secondary battery were fabricated in the same manner as in the Example 1 except that the positive electrode material powder was prepared to have an average primary particle diameter, measured by the X-ray diffractometer, of 8.0 nm.

The positive electrode material powder was analyzed with the use of the X-ray diffraction device, and it was confirmed that the powder had a crystal phase and an amorphous phase as in the Example 1. The crystallization thereof was 16 percent. It was estimated from the composition ratio of the raw materials that the amorphous phase included phosphor, lithium and antimony.

The initial discharging capacity and the cycle retention rate were measured for the obtained lithium ion secondary battery as in the Example 1: the initial discharging capacity was 308 mAh/g per an active material, and the cycle retention rate was 101.2 percent.

(Comparative Example 3)

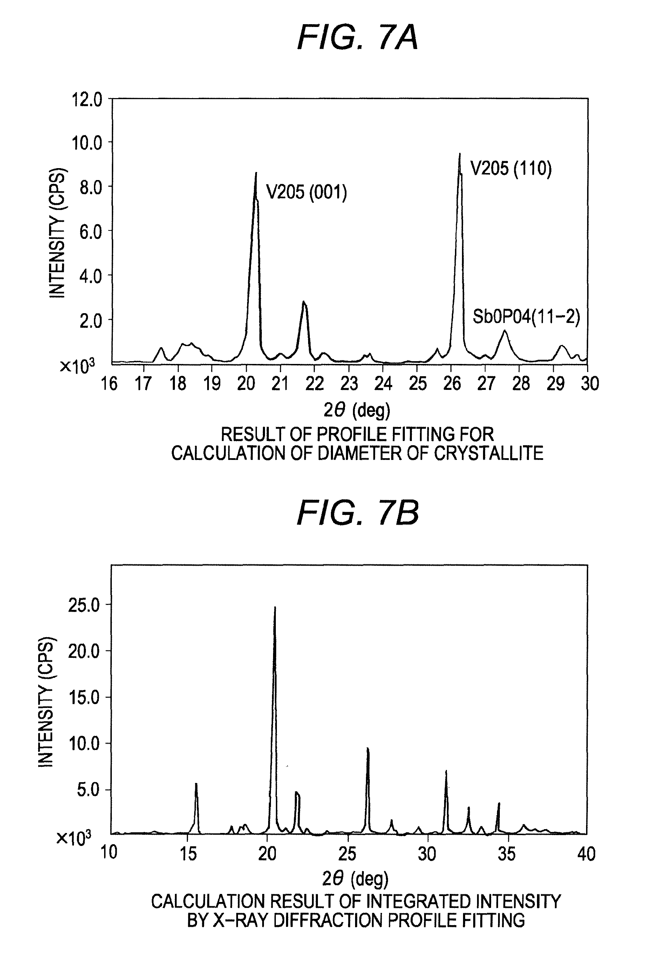

A positive electrode material powder and a lithium ion secondary battery were fabricated in the same manner as in the Example 1 except that an active material made of $V_2O_5$, which was produced by a method other than the melt-quenching method, $SbOPO_4$, $Li_2PO_6$ and $Li_6P_6O_8$ was used for a positive electrode material.
The positive electrode material powder was analyzed with the X-ray diffractometer, and it was confirmed that the powder had only a crystal phase as illustrated in Figs. 7A and 7B.
The initial discharging capacity and the cycle retention rate were measured for the obtained lithium ion secondary battery as in the Example 1: the initial discharging capacity was 365 mAh/g per an active material, and the cycle retention rate was 71.6 percent. Since this example does not include $Li_{0.3}V_2O_5$, the data of the particle diameter is not illustrated in Tables.

(Comparative Example 4)

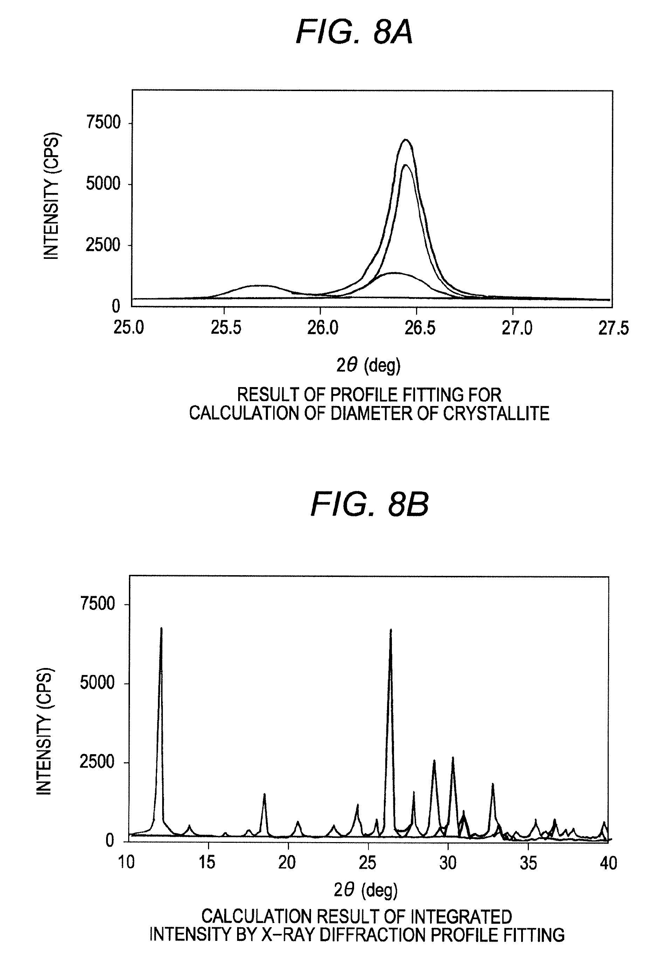

As illustrated in Table 1, an active material made of $Li_{0.3}V_2O_5$, $LiV_{10}O_{27}$, and $Li_3Fe_2(PO_4)_3$, which was obtained by a method other than the melt-quenching method, was used for the positive electrode material as in the Example 1. The active material was prepared by using a compound made of 63 mol percent $V_2O_5$, 8 mol percent $P_2O_5$, 9 mol percent $Fe_2O_3$, and 20 mol percent $Li_2O$ as raw materials as illustrated in Table 1. Except for this, a positive electrode material powder and a lithium ion secondary battery were fabricated in the same manner as described above.
The positive electrode material powder was analyzed with the X-ray diffractometer, and it was confirmed that the powder had only a crystal phase as illustrated in Figs. 8A and 8B. The average primary particle diameter of $Li_{0.3}V_2O_5$ was measured by the X-ray diffractometer, and the result was 49.6 nm.
The initial discharging capacity and the cycle retention rate were measured for the obtained lithium ion secondary battery as in the Example 1: , the initial discharging capacity was 376 mAh/g per an active material, and the cycle retention rate was 73.4 percent.

[Table 1]

| | Raw material (mol%) | | | | | Crystal phase |
|---|---|---|---|---|---|---|
| | $V_2O_5$ | $P_2O_5$ | $Sb_2O_3$ | $Fe_2O_3$ | $Li_2O$ | |
| Example 1 | 77 | 9 | 3 | | 11 | $Li_{0.3}V_2O_5$ |
| Example 2 | 70 | 9 | | 10 | 11 | $Li_{0.3}V_2O_5$ |
| Example 3 | 70 | 9 | | 10 | 11 | $Li_{0.3}V_2O_5$ |
| Example 4 | 70 | 9 | | 10 | 11 | $Li_{0.3}V_2O_5$ |
| Example 5 | 70 | 9 | | 10 | 11 | $Li_{0.3}V_2O_5$ |
| Example 6 | 70 | 9 | | 10 | 11 | $Li_{0.3}V_2O_5$ |
| Example 7 | 77 | 9 | 3 | | 11 | $Li_{0.3}V_2O_5$ |
| Example 8 | 77 | 9 | 3 | | 11 | $Li_{0.3}V_2O_5$ |
| Comparative example 1 | 70 | 9 | | | 11 | $Li_{0.3}V_2O_5$ |
| Comparative example 2 | 77 | 9 | 3 | | 11 | $Li_{0.3}V_2O_5$ |
| Comparative example 3 | 77 | 9 | 3 | | 11 | $V_2O_5$ $SbOPO_4$ $Li_2PO_6$ $Li_6P_6O_8$ |
| Comparative example 4 | 63 | 8 | | 9 | 20 | $Li_{0.3}V_2O_5$ $LiV_{10}O_{27}$ $Li_3Fe_2(PO_4)_3$ |

[Table 2]

| | Particle diameter (nm) | Crystallinity (%) | Initial discharging capacity (mAh/g active material) | Cycle retention rate (%) |
|---|---|---|---|---|
| Example 1 | 63.0 | 96 | 359 | 88.8 |
| Example 2 | 68.5 | 90 | 376 | 91.4 |
| Example 3 | 103.0 | 89 | 380 | 93.0 |
| Example 4 | 190.0 | 93 | 360 | 92.0 |
| Example 51 | 40.0 | 86 | 353 | 92.0 |
| Example 6 | 10.0 | 82 | 320 | 98.0 |
| Example 73 | 22.0 | 84 | 328 | 91.6 |
| Example 8 | 31.5 | 86 | 336 | 93.0 |
| Comparative example 1 | 250.0 | 60 | 312 | 85.0 |
| Comparative example 2 | 8.0 | 16 | 308 | 101.2 |
| Comparative example 3 | - | 100 | 365 | 71.6 |
| Comparative example 4 | 49.6 | 100 | 376 | 73.4 |

According to Table 2, and Figs. 4 and 5, in the lithium secondary battery that employs the positive electrode material powder according to the present invention, which has the crystal phase containing $Li_{0.3}V_2O_5$ with a primary particle diameter of 10 nm or more and 200 nm or less, and the amorphous phase, the initial discharging capacity greatly exceeds 320 mAh/g per an active material, and the cycle retention rate after 50 charging and discharging cycles exceeds 88 percent, which are excellent results.

The correlation between the primary particle diameter and the cycle retention rate is examined here with reference to Table 2 and Fig. 5A. In Comparative Example 1, the cycle retention rate was reduced by four to eight percent compared to the case in which the positive electrode material powder according to the present invention was used. Specifically, when the primary particle diameter exceeds 200 nm, the obtained crystal structure is fragile, so that the lithium insertion function is deteriorated along with the insertion and extraction of lithium ions. On the other hand, it is considered that, when the primary particle diameter is 200 nm or less, the high lithium insertion function can be maintained against the insertion and extraction of the lithium ions.

The correlation between the crystallization and the cycle retention rate is examined here with reference to Table 2 and Fig. 5B. In Examples 1 to 8 in which the positive electrode material powder according to the present invention was used, the cycle retention rate of about 90 percent were successfully maintained even if the crystallinity was very high such as 80 percent. Therefore, it is considered that, when the crystal phase includes $Li_{0.3}V_2O_5$, a diffusion path of lithium ions having a one-dimensional tunnel structure is formed, whereby the crystal structure is difficult to be collapsed.

On the other hand, when the correlation between the primary particle diameter of $Li_{0.3}V_2O_5$ and the initial discharging capacity is examined here with reference to Table 2 and Fig. 4A, Examples 1 to 5 and 8 in which the primary particle diameter of $Li_{0.3}V_2O_5$ was 30 nm or more and 200 nm or less exhibited the excellent initial discharging capacity such as 335 mAh/g or more per an active material. However, in Comparative Examples 1 and 2 in which the primary particle diameter of $Li_{0.3}V_2O_5$ was less than 10 nm or exceeded 200 nm, the initial discharging capacity was reduced by about 2.5 to 20 percent compared to the case in which the positive electrode material powder according to the present invention was used. Additionally, in Comparative Examples 3 and 4 in which the crystallinity is 100 percent, the cycle retention rate is relatively low, such as below 75 percent.

Accordingly, it was found that, in order to obtain a lithium ion secondary battery having a high capacity and excellent cycle characteristic, it is necessary to set the primary particle diameter of $Li_{0.3}V_2O_5$ to be within the range of 10 nm or more and 200 nm or less from the viewpoint of initial discharging capacity and the cycle retention rate. Additionally, in order to obtain such a battery, it is necessary to include an amorphous phase.

The correlation between the crystallization and the initial discharging capacity is examined with reference to Table 2 and Fig. 4B. As the crystallinity was increased, the initial discharging capacity also tended to increase. Accordingly, it was found that, so long as the crystal phase includes $Li_{0.3}V_2O_5$ having the primary particle diameter within the range of 10 nm or more and 200 nm or less, high crystallinity allows to obtain a high-performance lithium ion secondary battery.

The present invention is well applicable to a field of positive electrode materials for lithium secondary batteries.

**Claims**

1. An electrode material comprising a crystal phase and an amorphous phase, wherein the crystal phase includes a lithium vanadium oxide ($LixV_2O_5$) having a primary particle diameter within the range of 10 nm or more and 200 nm or less, and the lithium vanadium oxide has a diffusion path of lithium ions having one-dimensional tunnel structure when x = 0.3.

2. The electrode material according to claim 1, wherein the amorphous phase contains a glass material.

3. The electrode material according to claim 1 or claim 2, wherein
the amorphous phase contains phosphor and lithium, and antimony or iron.

4. The electrode material according to any one of claims 1 to 3, wherein
the electrode material is obtained by using $(Li_2O)a(P_2O_5)b(Fe_2O_3)c(V_2O_5)d(0<a<0.5, 0<b\leq0.5, 0<c\leq0.5, 0.5\leq d<1.0)$ as a raw material.

5. The electrode material according to any one of claims 1 to 4, wherein the electrode material is obtained by a melt-quenching method.

6. A lithium ion secondary battery comprising a positive electrode that employs an electrode material according to any one of claims 1 to 5.

## Fig. 1

S1 —— | Melting |

S2 —— | Quenching and solidifying |

S3 —— | Heat treatment |

S4 —— | Pulverizing |

↓

Electrode material powder

## Fig. 2

Fig. 3

# FIG. 4A

## PRIMARY PARTICLE DIAMETER vs DISCHARGING CAPACITY

Legend:
- △ EXAMPLE 1
- × EXAMPLE 2
- □ EXAMPLE 3
- ▽ EXAMPLE 4
- + EXAMPLE 5
- - EXAMPLE 6
- ◇ EXAMPLE 7
- ■ EXAMPLE 8
- ⊠ COMPARATIVE EXAMPLE 1
- ✳ COMPARATIVE EXAMPLE 2
- ○ COMPARATIVE EXAMPLE 4

Y-axis: INITIAL DISCHARGING CAPACITY (mAh/g PER ACTIVE MATERIAL)

X-axis: PRIMARY PARTICLE DIAMETER OF $Li_{0.3}V_2O_5$ (nm)

# FIG. 4B

## CRYSTALLINITY vs DISCHARGING CAPACITY

Legend:
- △ EXAMPLE 1
- × EXAMPLE 2
- □ EXAMPLE 3
- ▽ EXAMPLE 4
- + EXAMPLE 5
- - EXAMPLE 6
- ◇ EXAMPLE 7
- ■ EXAMPLE 8
- ⊠ COMPARATIVE EXAMPLE 1
- ✳ COMPARATIVE EXAMPLE 2
- ● COMPARATIVE EXAMPLE 3
- ○ COMPARATIVE EXAMPLE 4

Y-axis: INITIAL DISCHARGING CAPACITY (mAh/g PER ACTIVE MATERIAL)

X-axis: CRYSTALLINITY (%)

## FIG. 5A

PRIMARY PARTICLE DIAMETER vs CYCLE RETENTION RATE

## FIG. 5B

CRYSTALLINITY vs CYCLE RETENTION RATE

## FIG. 6A

X-RAY DIFFRACTION PROFILE AND NORMAL PEAK PATTERN

## FIG. 6B

CALCULATION RESULT OF INTEGRATED INTENSITY BY PROFILE

## FIG. 7A

RESULT OF PROFILE FITTING FOR
CALCULATION OF DIAMETER OF CRYSTALLITE

## FIG. 7B

CALCULATION RESULT OF INTEGRATED INTENSITY
BY X-RAY DIFFRACTION PROFILE FITTING

## FIG. 8A

RESULT OF PROFILE FITTING FOR
CALCULATION OF DIAMETER OF CRYSTALLITE

## FIG. 8B

CALCULATION RESULT OF INTEGRATED
INTENSITY BY X–RAY DIFFRACTION PROFILE FITTING

# EP 2 270 916 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5080791 B
- JP 8083606 A
- JP 2007042618 A
- JP 5080791 A

### Non-patent literature cited in the description

- **C.Delmas ; H. Congnac-Auradou ; J. M. Cocciantelli ; Menetrier, J. ; P. Doumerc.** *Solid State Ionics,* 1994, vol. 69, 257-264
- *Solid State Ionics,* 1994, vol. 69, 257-264